# EUROPÄISCHE PATENTSCHRIFT

(11) **EP 4 097 379 B1**
(45) Veröffentlichungstag und Bekanntmachung des Hinweises auf die Patenterteilung: **01.01.2025**
(21) Anmeldenummer: 20812261.4
(22) Anmeldetag: 24.11.2020
(51) Int. Cl.: F16J 15/3284, F16J 15/16, F16J 15/38

(54) **GLEITRINGDICHTUNGSANORDNUNG MIT VERBESSERTER NEBENDICHTUNG**
MECHANICAL SEAL ARRANGEMENT HAVING AN IMPROVED SECONDARY SEAL
AGENCEMENT DE JOINT D'ÉTANCHÉITÉ MÉCANIQUE PRÉSENTANT UN JOINT D'ÉTANCHÉITÉ SECONDAIRE AMÉLIORÉ

(30) Priorität: 27.01.2020 DE 102020200914
(43) Veröffentlichungstag der Anmeldung: 07.12.2022
(73) Patentinhaber: EagleBurgmann Germany GmbH & Co. KG, 82515 Wolfratshausen (DE)
(72) Erfinder: OTSCHIK, Joachim, 82418 Murnau (DE); PHILIPPI, Petia, 82515 Wolfratshausen (DE); MEIER, Felix, 82024 Taufkirchen (DE)
(74) Vertreter: Hoefer & Partner Patentanwälte mbB
(86) Internationale Anmeldenummer: PCT/EP2020/083145
(87) Internationale Veröffentlichungsnummer: WO 2021/151539

(56) Entgegenhaltungen:
- EP-A1- 3 594 307
- WO-A1-2019/002762
- DE-A1- 102012 022 465
- DE-A1- 4 409 021
- DE-U1- 202007 012 050
- GB-A- 2 264 986

## Beschreibung

Die vorliegende Erfindung betrifft eine Gleitringdichtungsanordnung mit einer verbesserten Nebendichtung.

Gleitringdichtungen mit Nebendichtungen sind aus dem Stand der Technik in unterschiedlichen Ausgestaltungen bekannt. Problematisch ist bei derartigen Nebendichtungen, welche beispielsweise an einer Rückseite eines Gleitrings abdichten, dass die Nebendichtungen hohen Drücken und/oder hohen Temperaturen ausgesetzt sind. Auch müssen Nebendichtungen ggf. minimal axial bewegbar sein, um auch axiale Verschiebungen, beispielsweise einer abzudichtenden Welle oder dgl. oder bei einem Anfahren und Abbremsen einer Maschine auftretende Bewegungen ausgleichen zu können. Auch muss die Nebendichtung im Stillstand der Maschine eine Abdichtungsfunktion erfüllen. Aufgrund der Druckunterschiede zwischen dem abzudichtenden Medium und der Atmosphäre, welche mehrere 10⁵ Pa aufweisen können, besteht die Gefahr, dass die Nebendichtung teilweise in einen Spalt am Gleitring, in welchem sie abdichten soll, hineingezogen wird, sodass am Gleitring eine sogenannte Extrusionsfahne entstehen kann, d. h., Material der Nebendichtung wird in den Spalt hineingezogen. Durch diese Extrusionsfahne im Spalt am Gleitring können sich Störungen im Betrieb bis zu einem möglichen vollständigen Versagen der Nebendichtung ergeben. Dies ist jedoch unbedingt zu vermeiden.

Um derartige Extrusionen von Nebendichtungen zu vermeiden, ist beispielsweise aus der DE10 2012 022 465 A1 eine Gleitringdichtungsanordnung mit einer Nebendichtung bekannt, welche ein zusätzliches Ringelement aus einem anderen Material am Spalt vorsieht. Hierdurch kann zwar grundsätzlich das Auftreten einer Extrusion der Nebendichtung in dem Spalt reduziert werden, allerdings muss für jeden Anwendungsfall ein speziell ausgelegter Ring für die Nebendichtung vorgesehen werden.

Ferner ist aus der DE 44 09 021 A1 eine Gleitringdichtungsanordnung mit einer Gleitringdichtung und einer Nebendichtung bekannt. Weiterhin zeigt die GB 2 264 986 A eine O-Ringdichtung aus einem mit PTFE beschichteten Elastomermaterial.

Es ist daher Aufgabe der vorliegenden Erfindung, eine Gleitringdichtungsanordnung bereitzustellen, welche bei einfachem Aufbau und einfacher, kostengünstiger Herstellbarkeit eine verbesserte Nebendichtung aufweist, welche insbesondere auch sichere Abdichtungsfunktionen bei der Abdichtung von Medien, die unter einem sehr hohen Druck stehen, ermöglicht. Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist demgegenüber den Vorteil auf, dass die Nebendichtung eine Beschichtung aufweist, wodurch eine Extrusionsneigung der Nebendichtung in einem Spalt, an welchem die Nebendichtung abdichtet, reduziert wird. Dies wird erfindungsgemäß dadurch erreicht, dass die Nebendichtung eine Beschichtung aufweist, welche über eine stoffschlüssige Verbindung mit einem Grundmaterial der Nebendichtung verbunden ist. Die Beschichtung ist dabei an zwei Seiten der Nebendichtung vorgesehen, nämlich an einer ersten Seite, die in Richtung eines der Gleitringe gerichtet ist, und einer zweiten Seite, die in Richtung eines hülsenartigen Bauteils, an welchem der Spalt zum Gleitring mit einer vorbestimmten Spalthöhe vorhanden ist, gerichtet ist. Hierbei ist eine Steifigkeit der Beschichtung der Nebendichtung größer als eine Steifigkeit des Grundmaterials. Ferner ist eine maximale Dicke der Beschichtung kleiner oder gleich der Spalthöhe des Spaltes, insbesondere kleiner oder gleich der halben Spalthöhe. Wenn nun im Betrieb der Gleitringdichtung Material der Nebendichtung in den Dichtspalt extrudiert, werden aufgrund der Beschichtung der Nebendichtung insbesondere Bereiche der ersten und zweiten Seite, an welcher die Beschichtung vorhanden ist, in den Spalt extrudiert. Dadurch ergibt sich im Spalt ein Übereinanderlegen der beschichteten Seitenbereiche der Nebendichtung, da Material sowohl von der ersten Seite als auch der zweiten Seite, welche jeweils die Beschichtung aufweisen, in den Spalt extrudiert. Die erste und zweite Seite der Nebendichtung, an denen die Beschichtung ausgebildet ist, grenzen aneinander, sodass insbesondere ein Übergangsbereich zwischen der ersten und zweiten Seite der Nebendichtung mit der Beschichtung versehen ist. Da eine Steifigkeit der Beschichtung jedoch größer ist als eine Steifigkeit des Grundmaterials der Nebendichtung, ergeben sich große Zug- und/oder Schubspannungen im Bereich der Beschichtung, welche noch nicht in den Spalt extrudiert ist, so dass ein weiteres Extrudieren der Nebendichtung in den Spalt verhindert wird. Somit kann durch die geschickte Anordnung der steiferen Beschichtung an der Nebendichtung ein zu tiefes Extrudieren von Material der Nebendichtung in den Spalt verhindert werden. Dabei ist die erfindungsgemäße Lösung auch für einen Fachmann überraschend einfach, da durch das Vorsehen der Beschichtung mit einer höheren Steifigkeit als das Grundmaterial der Nebendichtung zwar eine gewisse, kleine Extrusion in den Spalt erlaubt wird, diese jedoch dann durch die geschickte Auswahl der Beschichtung gestoppt wird und ein weiteres Extrudieren verhindert wird.

Eine besonders gute Dauerhaltbarkeit und hohe Güte bei der Abdichtung wird erreicht, da die Beschichtung an der ersten Seite und an der zweiten Seite der Nebendichtung nur teilweise vorgesehen ist. D. h., an den abzudichtenden Flächen der Gleitringdichtung liegt die Nebendichtung sowohl mit der Beschichtung als auch mit einem unbeschichteten Bereich aus Grundmaterial unmittelbar an der Rückseite des stationären Gleitrings und unmittelbar am hülsenartigen Bauteil an. Die unbeschichteten Bereiche sind aus dem Grundmaterial der Nebendichtung hergestellt und ermöglichen so eine sichere Abdichtung an ihren Kontaktflächen. Somit wird die Funktion der Abdichtung durch die unbeschichteten Bereiche der Nebendichtung übernommen und die Beschichtung kann für ein minimales Extrudieren in den Spalt ausgelegt werden.

Vorzugsweise ist die Dicke der Beschichtung genau die halbe Spalthöhe. Dadurch kann die Beschichtung immer noch sehr kostengünstig auf die Nebendichtung aufgebracht werden und, falls im Betrieb eine Extrusionssituation für die Nebendichtung in den Spalt auftritt, wird aufgrund der Dicke der Beschichtung entsprechend der halben Spalthöhe dann Material aus der Nebendichtung in den Spalt extrudiert, welcher ausschließlich aus der Beschichtung stammt. Somit wird der Spalt zur Hälfte durch die Beschichtung der ersten Seite der Nebendichtung und zur Hälfte durch die Beschichtung der zweiten Seite der Nebendichtung aufgefüllt.

Weiter bevorzugt ist eine Dicke der Beschichtung mindestens so dick wie ein 1/10 der Spalthöhe, insbesondere mindestens ein 1/5 der Spalthöhe, weiter insbesondere 1/4 der Spalthöhe. Die Beschichtung weist bevorzugt eine Dicke in einem Bereich von 20 µm bis 50 µm auf.

Eine Größe der Beschichtungsfläche auf der Nebendichtung an der ersten und zweiten Seite ist vorzugsweise gleich groß. Besonders bevorzugt ist eine Breite C der Beschichtung, ausgehend von der inneren Kante der Nebendichtung, an der ersten und zweiten Seite der Nebendichtung in einem Bereich des Vierfachen bis Zehnfachen der Spalthöhe des Spalts, insbesondere des Fünf- bis Sechsfachen der Spalthöhe.

Besonders bevorzugt ist ein Wert einer Steifigkeit der Beschichtung in einem Bereich von einem Zweifachen bis Zwölffachen einer Steifigkeit des Grundmaterials der Nebendichtung. Insbesondere ist die Steifigkeit der Beschichtung mindestens fünffach so groß wie die Steifigkeit des Grundmaterials.

Die Beschichtung umfasst bevorzugt Kunststoff, insbesondere einen Thermoplast und weiter insbesondere einen sortenreinen Kunststoff oder ein Kunststoff mit Füllmaterial. Das Füllmaterial ist bevorzugt Kohlegraphit. Als Kunststoff kann beispielsweise Polyetherketon (PEK) verwendet werden, insbesondere Polyaryletherketon (PAEK) oder Polyetheretherketon (PEEK) oder Polyamidimid (PAI) oder Polyimid (PI) oder ein beliebiges Gemisch dieser Kunststoffe. Die Kunststoffe können auch geringe Anteil von Füllstoffen, z.B. Kohle oder PTFG, enthalten.

Als Grundmaterial der Nebendichtung wird vorzugsweise Polytetrafluorethylen (PTFE) oder ein Elastomer oder Polytetrafluorethylen mit Füllstoff, insbesondere mit Kohlegraphit, verwendet.

Vorzugsweise dichtet die Nebendichtung direkt an einem Gleitring der Gleitringdichtung, insbesondere am stationären Gleitring ab. Weiter bevorzugt dichtet die Nebendichtung direkt am hülsenförmigen Bauteil ab. Alternativ ist zwischen dem Gleitring und dem hülsenförmigen Bauteil ein Zwischenbauteil vorgesehen.

Die Nebendichtung dichtet besonders bevorzugt an einer Druckseite der Gleitringdichtung ab, sodass die Nebendichtung dem abzudichtenden Druck ausgesetzt ist.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Ansicht einer Gleitringdichtungsanordnung gemäß einem ersten Ausführungsbeispiel der Erfindung mit einer Nebendichtung in einem nicht-extrudierten Zustand,
- Fig. 2: eine vergrößerte schematische Ansicht der Nebendichtung von Fig. 1,
- Fig. 3: eine schematische Darstellung der Gleitringdichtungsanordnung von Figur 1 mit einer Nebendichtung im extrudierten Zustand,
- Fig. 4: ein Diagramm, welches die Extrusion E der Nebendichtung von Figur 2 und 3 in Abhängigkeit eines Drucks P für verschiedene Schichtdicken im Vergleich mit einer unbeschichteten Nebendichtung zeigt.

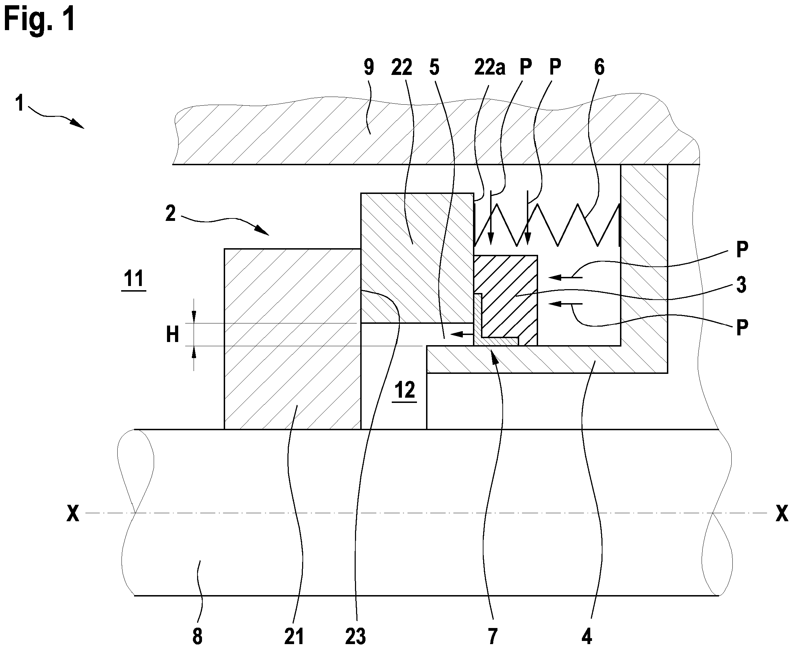

Nachfolgend wird unter Bezugnahme auf die Figuren 1 bis 4 eine Gleitringdichtungsanordnung 1 gemäß einem ersten bevorzugten Ausführungsbeispiel der Erfindung im Detail beschrieben.

Wie aus Figur 1 ersichtlich ist, umfasst die Gleitringdichtungsanordnung 1 eine Gleitringdichtung 2 mit einem rotierenden Gleitring 21 und einem stationären Gleitring 22, welche zwischen sich einen Dichtspalt 23 definieren.

Die Gleitringdichtung 2 dichtet einen Produktbereich 11 von einem Atmosphärenbereich 12 ab. Dabei steht der Produktbereich 11 unter einem hohen Druck.

Die Abdichtung erfolgt dabei an einer Welle 8, wobei der rotierende Gleitring 21 mit der Welle 8 verbunden ist.

Die Gleitringdichtung 2 umfasst ferner ein Vorspannelement 6, welches in diesem Ausführungsbeispiel den stationären Gleitring 22 gegen den rotierenden Gleitring 21 vorspannt. Das Bezugszeichen 9 bezeichnet ein stationäres Gehäuse der Gleitringdichtungsanordnung.

Ferner ist ein hülsenartiges Bauteil 4 vorgesehen, welches stationär ist, und durch welches die Welle 8 hindurchgeführt ist. Hierbei ist das hülsenartige Bauteil 4 teilweise radial innerhalb einer Nebendichtung 3 und radial innerhalb des stationären Gleitrings 22 angeordnet. Dadurch ergibt sich zwischen dem hülsenartigen Bauteil 4 und dem stationären Gleitring 22 ein Spalt 5.

Wie aus Figur 1 ersichtlich ist, ist die Gleitringdichtungsanordnung 1 derart aufgebaut, dass der Produktbereich 11 auch an einer Rückseite 22a des stationären Gleitrings 22 reicht. Dadurch ist auch die Nebendichtung 3 dem Druck im Produktbereich 11 ausgesetzt, was in Figur 1 durch die Pfeile P angedeutet ist.

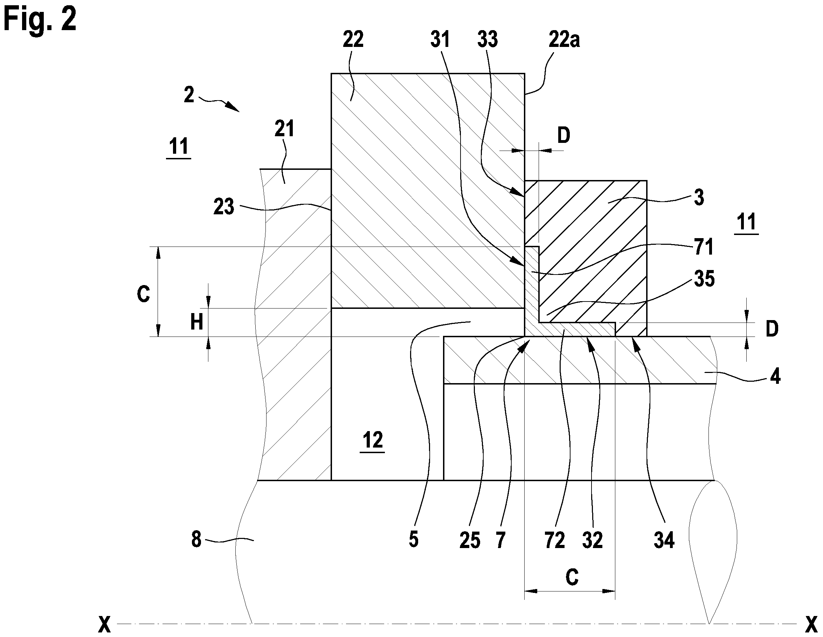

Die Nebendichtung 3 weist eine Beschichtung 7 auf, welche im Detail aus Figur 2 ersichtlich ist. Die Beschichtung 7 ist an einer ersten Seite 31 der Nebendichtung als erster Beschichtungsbereich 71 und einer zweiten Seite 32 der Nebendichtung als zweiter Beschichtungsbereich 72 ausgebildet. Dabei sind die erste Seite 31 und die zweite Seite 32 nicht vollständig beschichtet, sondern es sind noch ein unbeschichteter Bereich 33 an der ersten Seite und ein unbeschichteter Bereich 34 an der zweiten Seite vorgesehen. Die Beschichtung 7 ist dabei an einem Übergangsbereich 25 zwischen der ersten Seite 31 und der zweiten Seite 32 ausgebildet. Der Übergangsbereich 25 ist in diesem Ausführungsbeispiel eine Kante der Nebendichtung 3 (vgl. Figur 2). Eine Breite C der Beschichtung ist hierbei an der ersten Seite 31 und der zweiten Seite 32 gleich.

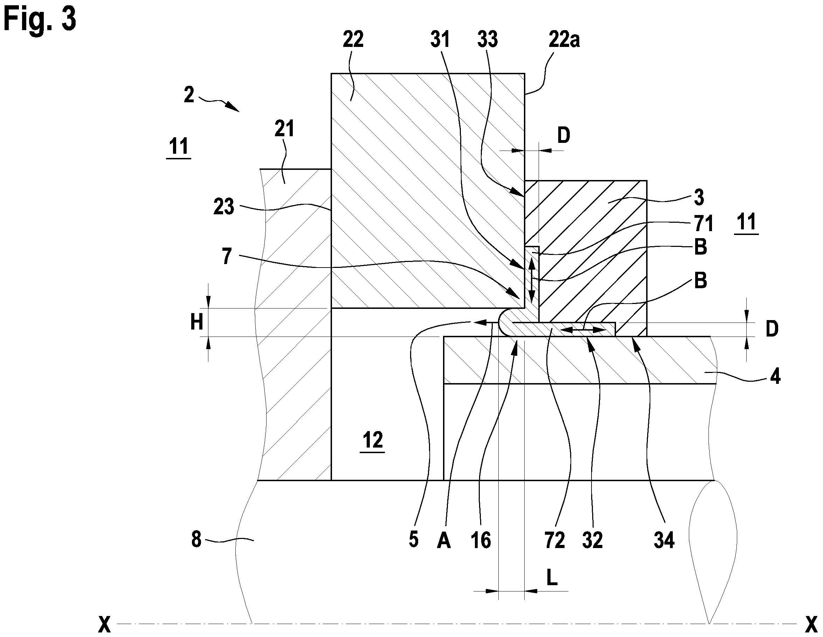

Eine Dicke D der Beschichtung ist an der ersten und zweiten Seite konstant. Figur 2 zeigt dabei den nicht-extrudierten Zustand der Nebendichtung 3, in welcher die Nebendichtung 3 nicht in den Spalt 5 extrudiert ist. Figur 3 zeigt hingegen den extrudierten Zustand, welcher im Betrieb, insbesondere aufgrund des hohen Druckunterschiedes zwischen dem Produktbereich 11 und dem Atmosphärenbereich 12 auftreten kann.

Wie aus Figur 3 ersichtlich ist, wird die Nebendichtung 3 in den Spalt 5 extrudiert. Dabei ergibt sich jedoch nur eine sehr kurze Extrusionsfahne 16 in Axialrichtung X-X der Gleitringdichtungsanordnung, da, wie in Figur 3 gezeigt, nur beschichtete Bereiche der Nebendichtung 3 in den Spalt 5 extrudiert werden (Pfeil A).

Da in diesem Ausführungsbeispiel eine Dicke D der Beschichtung der halben Spalthöhe H des Spaltes 5 entspricht, werden somit nur Beschichtungsbereiche 71, 72 von der ersten Seite 31 und der zweiten Seite 32 der Nebendichtung 3 in den Spalt 5 extrudiert (vgl. Figur 3).

Eine Steifigkeit der Beschichtung 7 ist dabei größer als eine Steifigkeit des Grundmaterials der Nebendichtung 3. Die Beschichtung ist vorzugsweise ein Polyetherketon, insbesondere PEEK, und das Grundmaterial der Nebendichtung ist Polytetrafluorethylen.

Aufgrund der höheren Steifigkeit der Beschichtung 7 gegenüber dem Grundmaterial der Nebendichtung 3 ergibt sich eine Begrenzung einer Länge L der Extrusionsfahne 16 derart, dass in der steiferen Beschichtung 7, sowohl an der ersten Seite 31 als auch der zweiten Seite 32 Zug- und/oder Schubspannungen entstehen, welche einer weiteren Extrusion der Nebendichtung 3 in den Spalt 5 entgegenwirken. Die Zug- und/oder Schubspannungen sind in Figur 3 durch den Doppelpfeil B angedeutet. Diese Zugspannungen B in den Beschichtungsbereichen 71, 72 verhindern, dass die Nebendichtung 3 weiter in den Spalt 5 extrudiert wird.

Da die Beschichtung 7 nicht vollständig an der ersten Seite 31 und der zweiten Seite 32 der Nebendichtung 3 vorgesehen ist, liegt das Grundmaterial der Nebendichtung 3 am unbeschichteten Bereich 33 somit unmittelbar an der Rückseite 22a des stationären Gleitrings 22 und am unbeschichteten Bereich 34 an dem hülsenartigen Bauteil 4 an. Dadurch kann in diesen Bereichen 33, 34 eine sichere Abdichtung erreicht werden, sodass die Dichtungseigenschaften der Nebendichtung 3 durch die Beschichtung 7 nicht wesentlich beeinflusst werden.

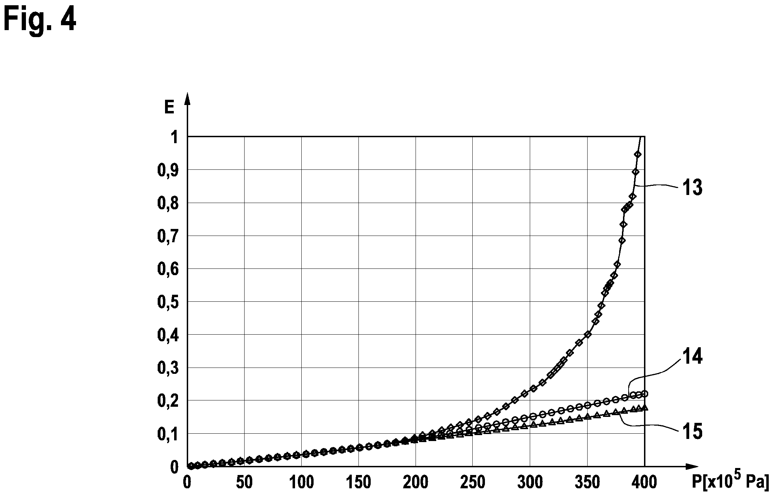

Figur 4 zeigt ein Diagramm eines Vergleichs einer Extrusion E (dimensionslos) verschiedener Nebendichtungen in den Spalt 5 über dem Druck P in Pa im Produktbereich 11 bei Umgebungstemperatur (20 °C). Dabei ist die mit dem Bezugszeichen 13 bezeichnete Kurve eine Nebendichtung ohne Beschichtung. Bei der mit 14 bezeichneten Kurve ist eine Beschichtung 7 mit einer Dicke D von 25 µm vorgesehen. Bei der mit 15 bezeichneten Kurve ist eine Beschichtung mit 50 µm vorgesehen. Eine Spalthöhe H beträgt in allen Versuchen 100 µm und eine Steifigkeit der Beschichtung ist jeweils um den Faktor 5 größer als die des Grundmaterials.

Wie aus dem Diagramm von Figur 4 ersichtlich ist, ist bis zu einem Bereich von ungefähr 200 x 10⁵ Pa die Extrusion E bei allen Kurven 13, 14, 15 ungefähr gleich. Bei einem höheren Druck als 200 x 10⁵ Pa, wird die Extrusionsneigung der Nebendichtung ohne Beschichtung signifikant höher. Hierbei ergibt sich dann ohne Beschichtung bei einem Druck von ungefähr 400 x 10⁵ Pa eine Extrusionsfahne 16 im Bereich von ca. E = 1. Im Unterschied dazu ist bei der Kurve 14 mit einer Beschichtung mit einer Dicke von 25 µm die Extrusionsfahne im Bereich von 400 x 10⁵ Pa mit bei ca. E = 0,2 deutlich um den Faktor fünf kleiner. Eine weitere Verkleinerung der Extrusionsfahne auf E = ca. 0,15 kann durch eine Schichtdicke von 50 µm für die Beschichtung 7 erreicht werden.

Wie aus dem Diagramm von Figur 4 allerdings ersichtlich ist, ist der Unterschied zwischen der Länge der Extrusionsfahnen bei einem Druck von 400 x 10⁵ Pa zwischen der 25 µm-Beschichtung und der 50 µm-Beschichtung nur im Bereich von ca. 10 µm. Daraus kann geschlossen werden, dass eine dickere Beschichtung als 50 µm keine signifikant unterschiedlichen Extrusionsfahnen in den Spalt 5 verursachen würde.

Die besten Ergebnisse bei der Verhinderung der Extrusion werden dabei erreicht, wenn die Schichtdicke D die Hälfte der Spalthöhe H des Spalts 5 beträgt. Dann ergibt sich, wie in Figur 3 gezeigt, ein Extrusionsverhalten, bei dem nur eine sehr kleine Extrusionsfahne 16 in den Spalt 5 hineingezogen wird und dann die Zug- und/oder Schubspannungen B in der Beschichtung 7 eine weitere Extrusion verhindern.

### Bezugszeichenliste

- 1: Gleitringdichtungsanordnung
- 2: Gleitringdichtung
- 3: Nebendichtung
- 4: Hülsenartiges Bauteil
- 5: Spalt
- 6: Vorspannelement
- 7: Beschichtung
- 8: Welle
- 9: Gehäuse
- 11: Produktbereich
- 12: Atmopsphärenbereich
- 13: Nebendichtung ohne Beschichtung (Stand der Technik)
- 14: Nebendichtung mit Beschichtung von 25 µm
- 15: Nebendichtung mit Beschichtung von 50 µm
- 16: Extrusionsfahne
- 21: Rotierender Gleitring
- 22: Stationärer Gleitring
- 22a: Rückseite des stationären Gleitrings
- 23: Dichtspalt
- 25: Übergangsbereich
- 31: Erste Seite der Nebendichtung
- 32: Zweite Seite der Nebendichtung
- 33: Unbeschichteter Bereich an der ersten Seite der Nebendichtung
- 34: Unbeschichteter Bereich an der zweiten Seite der Nebendichtung
- 71: Beschichtungsbereich an der ersten Seite
- 72: Beschichtungsbereich an der zweiten Seite
- A: Extrusionsrichtung
- B: Zugspannung in der Beschichtung
- C: Breite
- D: Dicke der Beschichtung
- E: Extrusion
- H: Spalthöhe
- L: Länge der Extrusionsfahne
- P: Druck auf Nebendichtung
- X-X: Axialrichtung

## Patentansprüche

1. Gleitringdichtungsanordnung, umfassend
- eine Gleitringdichtung (2) mit einem rotierenden Gleitring (21) und einem stationären Gleitring (22), welche zwischen sich einen Dichtspalt (23) definieren,
- eine Nebendichtung (3), welche an einer Rückseite eines der Gleitringe, die von einer Gleitfläche dieses Gleitrings abgewandt ist, abgeordnet ist,
- wobei die Nebendichtung (3) aus einem Grundmaterial hergestellt ist und eine Beschichtung (7) aufweist derart, dass eine stoffschlüssige Verbindung zwischen der Beschichtung (7) und dem Grundmaterial der Nebendichtung ausgebildet ist,
- ein hülsenartiges Bauteil (4), welches radial innerhalb der Nebendichtung (3) angeordnet ist, wobei ein Spalt (5) mit einer Spalthöhe (H) zwischen dem hülsenartigen Bauteil (4) und einem radial nach innen gerichteten Bereich eines der Gleitringe vorhanden ist, wobei die Nebendichtung (3) an der Rückseite dieses Gleitrings und dem hülsenartigen Bauteil (4) abdichtet,
- wobei die Beschichtung (7) an einer ersten Seite (31) der Nebendichtung (3), die zum Gleitring gerichtet ist und einer zweiten Seite (32) der Nebendichtung (3), die zum hülsenartigen Bauteil (4) gerichtet ist, vorgesehen ist,
- wobei eine Steifigkeit der Beschichtung (7) größer ist als eine Steifigkeit des Grundmaterials der Nebendichtung (3),
- wobei eine Dicke (D) der Beschichtung kleiner oder gleich ist wie eine Spalthöhe (H) des Spaltes (5),
- wobei die Beschichtung an der ersten Seite (31) der Nebendichtung (3) nur teilweise vorgesehen ist,
- wobei die Beschichtung an der zweiten Seite (32) der Nebendichtung (3) nur teilweise vorgesehen ist, und
- wobei das Grundmaterial der Nebendichtung (3) an dem unbeschichteten Bereich (33) der ersten Seite (31) unmittelbar an der Rückseite (22a) des stationären Gleitrings (22) anliegt und wobei das Grundmaterial der Nebendichtung (3) an dem unbeschichteten Bereich (34) der zweiten Seite (32) unmittelbar am hülsenartigen Bauteil anliegt.

2. Gleitringdichtungsanordnung nach Anspruch 1, wobei die Dicke der Beschichtung kleiner oder gleich ist wie die halbe Spalthöhe (H) des Spaltes (5).

3. Gleitringdichtungsanordnung nach Anspruch 1 oder 2, wobei die Dicke (D) der Beschichtung mindestens 1/10 der Spalthöhe (H) des Spaltes, insbesondere mindestens 1/5 der Spalthöhe (H) des Spaltes (5) ist, weiter insbesondere mindestens 1/4 der Spalthöhe (H) ist.

4. Gleitringdichtungsanordnung nach einem der vorhergehenden Ansprüche, wobei eine Breite (C) der Beschichtung auf der Nebendichtung (3) das Vier- bis Zehnfache der Spalthöhe (H) beträgt.

5. Gleitringdichtungsanordnung nach einem der vorhergehenden Ansprüche, wobei ein Wert einer Steifigkeit der Beschichtung (7) in einem Bereich eines Zweifachen bis Zwölffachen eines Wertes einer Steifigkeit des Grundmaterials der Nebendichtung (3), insbesondere fünffach, ist.

6. Gleitringdichtungsanordnung nach einem der vorhergehenden Ansprüche, wobei die Beschichtung einen Kunststoff, insbesondere einen sortenreinen Kunststoff oder einen Kunststoff mit Füllmaterial umfasst.

7. Gleitringdichtungsanordnung nach Anspruch 6, wobei die Beschichtung Polyetherketon oder Polyaryletherketon oder Polyetheretherketon oder Polyamidimid oder Polyimid oder ein beliebiges Gemisch daraus umfasst.

8. Gleitringdichtungsanordnung nach einem der vorhergehenden Ansprüche, wobei das Grundmaterial der Nebendichtung (3) Polytetrafluorethylen ist oder Polytetraflourethylen mit Füllstoff ist oder ein Elastomer ist.

## Claims

1. A mechanical seal arrangement comprising
- a mechanical seal (2) having a rotating slide ring (21) and a stationary slide ring (22) defining a seal gap (23) therebetween,
- a secondary seal (3) arranged on a back side of one of the slide rings facing away from a sliding surface of the slide ring,
- the secondary seal (3) being made of a base material and having a coating (7) such that a substance-to-substance bond is formed between the coating (7) and the base material of the secondary seal,
- a sleeve-shaped component (4) which is arranged radially inside the secondary seal (3), a gap (5) having a gap height (H) being present between the sleeve-shaped component (4) and a region of one of the slide rings facing radially inwards, the secondary seal (3) sealing against the back side of this slide ring and the sleeve-shaped component (4)
- wherein the coating (7) is provided on a first side (31) of the secondary seal (3) facing the slide ring and a second side (32) of the secondary seal (3) facing the sleeve-shaped component (4),
- wherein a stiffness of the coating (7) is greater than a stiffness of the base material of the secondary seal (3),
- wherein a thickness (D) of the coating is smaller than or equal to a gap height (H) of the gap (5),
- wherein the coating on the first side (31) of the secondary seal (3) is provided only partially,
- wherein the coating on the second side (32) of the secondary seal (3) is provided only partially, and
- wherein the base material of the secondary seal (3) at the uncoated region (33) of the first side (31) bears directly against the rear side (22a) of the stationary slide ring (22) and wherein the base material of the secondary seal (3) at the uncoated region (34) of the second side (32) bears directly against the sleeve-shaped component.

2. The mechanical seal arrangement according to claim 1, wherein the thickness of the coating is smaller than or equal to half of the gap height (H) of the gap (5).

3. The mechanical seal arrangement according to claim 1 or 2, wherein the thickness (D) of the coating is at least 1/10 of the gap height (H) of the gap, especially at least 1/5 of the gap height (H) of the gap (5), further especially at least 1/4 of the gap height (H).

4. The mechanical seal arrangement according to one of the preceding claims, wherein a width (C) of the coating on the secondary seal (3) is four to ten times the gap height (H).

5. The mechanical seal arrangement according to one of the preceding claims, wherein a value of a stiffness of the coating (7) is in a range of two times to twelve times a value of a stiffness of the base material of the secondary seal (3), especially five times.

6. The mechanical seal arrangement according to one of the preceding claims, wherein the coating comprises a plastic material, especially a single-grade plastic material or a plastic material including filler material.

7. The mechanical seal arrangement according to claim 8, wherein the coating comprises polyetherketone or polyaryletherketone or polyetheretherketone or polyamideimide or polyimide or any mixture thereof.

8. The mechanical seal arrangement according to one of the preceding claims, wherein the base material of the secondary seal (3) is polytetrafluoroethylene or is polytetrafluoroethylene including filler or is an elastomer.

## Revendications

1. Ensemble de garniture étanche à anneau glissant comprenant
- une garniture étanche à anneau glissant (2) avec un anneau glissant rotatif (21) et un anneau glissant stationnaire (22), lesquels définissent entre eux une fente d'étanchéité (23),
- un joint d'étanchéité secondaire (3), lequel est situé sur un côté arrière d'un des anneaux glissants, qui est opposé à une surface de glissement dudit anneau glissant,
- dans lequel le joint d'étanchéité secondaire (3) est fabriqué à partir d'un matériau de base et présente un revêtement (7) de telle manière qu'une liaison par liaison de matière est réalisée entre le revêtement (7) et le matériau de base du joint d'étanchéité secondaire,
- un composant de type manchon (4), lequel est disposé radialement à l'intérieur du joint d'étanchéité secondaire (3), dans lequel une fente (5) est présente avec une hauteur de fente (H) entre le composant de type manchon (4) et une zone, dirigée radialement vers l'intérieur, d'un des anneaux glissants, dans lequel le joint d'étanchéité secondaire (3) assure l'étanchéité sur le côté arrière dudit anneau glissant et du composant de type manchon (4),
- dans lequel le revêtement (7) est prévu sur un premier côté (31) du joint d'étanchéité secondaire (3), qui est dirigé vers l'anneau glissant, et sur un deuxième côté (32) du joint d'étanchéité secondaire (3), qui est dirigé vers le composant de type manchon (4),
- dans lequel une rigidité du revêtement (7) est supérieure à une rigidité du matériau de base du joint d'étanchéité secondaire (3),
- dans lequel une épaisseur (D) du revêtement est inférieure ou égale à une hauteur de fente (H) de la fente (5),
- dans lequel le revêtement est prévu seulement en partie sur le premier côté (31) du joint d'étanchéité secondaire (3),
- dans lequel le revêtement est prévu seulement en partie sur le deuxième côté (32) du joint d'étanchéité secondaire (3), et
- dans lequel le matériau de base du joint d'étanchéité secondaire (3) repose directement sur le côté arrière (22a) de l'anneau glissant stationnaire (22) sur la zone non revêtue (33) du premier côté (31) et dans lequel le matériau de base du joint d'étanchéité secondaire (3) repose directement sur le composant de type manchon sur la zone non revêtue (34) du deuxième côté (32).

2. Ensemble de garniture étanche à anneau glissant selon la revendication 1, dans lequel l'épaisseur du revêtement est inférieure ou égale à la moitié de la hauteur de fente (H) de la fente (5).

3. Ensemble de garniture étanche à anneau glissant selon la revendication 1 ou 2, dans lequel l'épaisseur (D) du revêtement est d'au moins 1/10 de la hauteur de fente (H) de la fente, en particulier d'au moins 1/5 de la hauteur de fente (H) de la fente (5), est par ailleurs en particulier d'au moins 1/4 de la hauteur de fente (H).

4. Ensemble de garniture étanche à anneau glissant selon l'une quelconque des revendications précédentes, dans lequel une largeur (C) du revêtement sur le joint d'étanchéité secondaire (3) est égale à 4 fois à 10 fois la hauteur de fente (H).

5. Ensemble de garniture étanche à anneau glissant selon l'une quelconque des revendications précédentes, dans lequel une valeur d'une rigidité du revêtement (7) se situe dans une plage de 2 fois à 12 fois une valeur d'une rigidité du matériau de base du joint d'étanchéité secondaire (3), en particulier de 5 fois.

6. Ensemble de garniture étanche à anneau glissant selon l'une quelconque des revendications précédentes, dans lequel le revêtement comprend une matière plastique, en particulier une matière plastique par type ou une matière plastique avec du matériau de remplissage.

7. Ensemble de garniture étanche à anneau glissant selon la revendication 6, dans lequel le revêtement comprend de la polyéthercétone ou de la polyaryléthercétone ou de la polyéthercétone ou de polyamide-imide ou de polyimide ou un mélange quelconque de ceux-ci.

8. Ensemble de garniture étanche à anneau glissant selon l'une quelconque des revendications précédentes, dans lequel le matériau de base du joint d'étanchéité secondaire (3) est du polytétrafluoroéthylène ou est du polytétrafluoroéthylène avec de la matière de remplissage ou est un élastomère.
